# EUROPÄISCHE PATENTSCHRIFT

(11) **EP 1 916 437 B1**
(45) Veröffentlichungstag und Bekanntmachung des Hinweises auf die Patenterteilung: **26.08.2009**
(21) Anmeldenummer: 07021013.3
(22) Anmeldetag: 26.10.2007
(51) Int. Cl.: F16D 65/097, F16D 65/092

(54) **Bremsbelag für eine Scheibenbremse**
Brake pad for a disc brake
Garniture de frein pour un frein à disque

(30) Priorität: 26.10.2006 DE 102006050521
(43) Veröffentlichungstag der Anmeldung: 30.04.2008
(73) Patentinhaber: KNORR-BREMSE SYSTEME FÜR NUTZFAHRZEUGE GMBH, 80809 München (DE)
(72) Erfinder: Gasslbauer, Franz, 84381 Johanniskirchen (DE)
(74) Vertreter: Mattusch, Gundula

(56) Entgegenhaltungen:
- EP-A- 0 877 176
- WO-A-20/07051615
- WO-A-20/07134785
- US-A- 4 049 087
- US-A- 4 560 038

## Beschreibung

Die Erfindung betrifft einen Bremsbelag für eine Scheibenbremse entsprechend dem Oberbegriff des Anspruchs 1.

Ein derartiger Bremsbelag ist aus der nachveröffentlichten WO 2007/134785 A1 bekannt, ebenso wie aus der DE 40 20 287 A1. Die in dieser Literatur gezeigte und beschriebene Konstruktion hat sich in der Praxis durchaus bewährt. Dabei bildet die Bremsbelagfeder einen Griff, so dass die Baueinheit Bremsbelagfeder/Bremsbelag beispielsweise zur Montage bzw. Demontage leicht zu handhaben ist.

Zur Festlegung der Belaghaltefeder sind an der Belagträgerplatte mit quer zur Längsrichtung der Belagträgerplatte sich erstreckenden Hinterschneidungen versehene Haltelaschen angeformt, die schlitzförmige Ausnehmungen in der Belaghaltefeder durchtreten, die dabei die Hinterschneidungen hintergreifen, so dass ein Formschluss gebildet ist, durch den die Belaghaltefeder in radialer Richtung gehalten wird.

Da die Hinterschneidung der jeweiligen Haltelasche in dem dem äußeren Ende der Belaghaltefeder zugeordneten Bereich vorgesehen ist, ist ein sicherer Halt der Belaghaltefeder an den Haltelaschen nur in entspannter Lage der Belaghaltefeder gewährleistet.

Unter Belastung, also bei einem Andrücken der Belaghaltefeder in Richtung der Belagträgerplatte, streckt sich die Belaghaltefeder und drückt den Bremsbelag ohne Sicherung an den Haltelaschen nach unten. In diesem Fall ist keine ausreichende Führung der Belaghaltefeder gegeben, so dass diese zu einem seitlichen Kippen neigt, was die Funktionsfähigkeit der Belaghaltefeder insgesamt beeinträchtigt.

Insbesondere bei der Herstellung der Belagträgerplatte aus Guss besteht die Gefahr der sogenannten "Weiß-Einstrahlung", einer Verhärtung bzw. Versprödung des Materials, die zu einem Abbrechen der Haltelaschen führen kann, zumal die Haltelaschen des bekannten Bremsbelages eine äußerst filigrane Form aufweisen, die vielfach nicht die notwendige Stabilität besitzen.

Ein weiterer Nachteil des bekannten Bremsbelages besteht darin, dass die Belaghaltefeder bei einem ersatzbedingten Austausch des Bremsbelages problemlos zu demontieren und wiederzuverwenden ist, was aufgrund der Dauerbelastung der Belaghaltefeder im Betrieb und den sich daraus ergebenden Materialermüdungen, die letztendlich zu einem Bruch führen können, nicht gewünscht ist.

Der Erfindung liegt daher die Aufgabe zugrunde, einen Bremsbelag der gattungsgemäßen Art so weiterzuentwickeln, dass mit geringem konstruktivem Aufwand die Belaghaltefeder am Bremsbelag sicherer gehalten und damit die Betriebssicherheit erhöht wird.

Diese Aufgabe wird durch einen Bremsbelag mit den Merkmalen des Anspruchs 1 gelöst.

Durch die Erfindung wird erreicht, dass die Belaghaltefeder in jedem Fall, also in ent- wie in belasteter Stellung sicher an der Belagträgerplatte gehalten wird.

Da die Länge der Hinterschneidung prinzipiell frei wählbar ist, kann deren Anlagefläche, an der sich die zahnförmigen Rastzungen im Sinne von Widerhaken abstützen, so dimensioniert sein, dass die Belaghaltefeder auch in gestreckter, also entspannter Position, gehalten ist, wodurch das zum Stand der Technik beschriebene Kippen ausgeschlossen ist.

Nach einer vorteilhaften Weiterbildung der Erfindung ist beidseitig an der jeweiligen Haltelasche eine Hinterschneidung vorgesehen, wobei diese vorzugsweise durch eine Begrenzungswandung einer Nut gebildet wird, an deren der die Hinterschneidung bildenden Wandung gegenüberliegenden Wand ein Schenkel der Belaghaltefeder anliegt, der die Rastzungen trägt. Dabei sind die Rastzungen beispielsweise durch Stanzen angeformt und mit einer Spitze ausgebildet, die sich in die Hinterschneidung eingraben kann. Denkbar ist jedoch auch, die Rastzungen trapezförmig oder in einer anderen geeigneten Form auszubilden, wobei die gebildete Kante an der Hinterschneidung anliegt.

Zur Montage der Belaghaltefeder wird diese im Bereich des Längsschlitzes über die Haltelasche gesteckt, unter gewisser Aufspreizung der sich gegenüberliegenden, geringfügig in den Schlitz ragenden Rastzungen, die nach dem Aufstecken aufgrund ihrer Rückstellkräfte in die Hinterschneidung schnappen und dort, wie erwähnt, anliegen. Da die Belaghaltefeder aus einem Federblech besteht, wird die Federkraft zur Rückstellung der Rastzungen wirksam.

Die Erfindung ermöglicht des Weiteren eine entsprechende Dimensionierung der Haltelaschen sowohl hinsichtlich ihrer Länge wie auch hinsichtlich ihrer Dicke, so dass die zum Stand der Technik beschriebenen fertigungsbedingten Festigkeitsprobleme, insbesondere bei der Ausbildung der Belagträgerplatte als Gussteil, praktisch nicht mehr auftreten bzw. nicht wirksam werden.

Die Rastzungen sind so geformt, dass die Belaghaltefeder bei einem verschleißbedingten Austausch des Bremsbelages nicht zerstörungsfrei abgenommen werden kann, so dass gewährleistet ist, dass in jedem Fall eine komplett neue Baueinheit Bremsbelag/Belaghaltefeder montiert wird. Naturgemäß trägt dies zu einer wesentlichen Verbesserung der Betriebssicherheit der Scheibenbremse insgesamt bei.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen erfindungsgemäßen Bremsbelag in einer Rückansicht
- Figur 2: einen Teilausschnitt des Bremsbelages in einer geschnittenen Seitenansicht entsprechend der Linie II - II in Figur 1.
- Figur 3: ein weiteres Ausführungsbeispiel der Erfindung in einer Darstellung entsprechend der Figur 2.

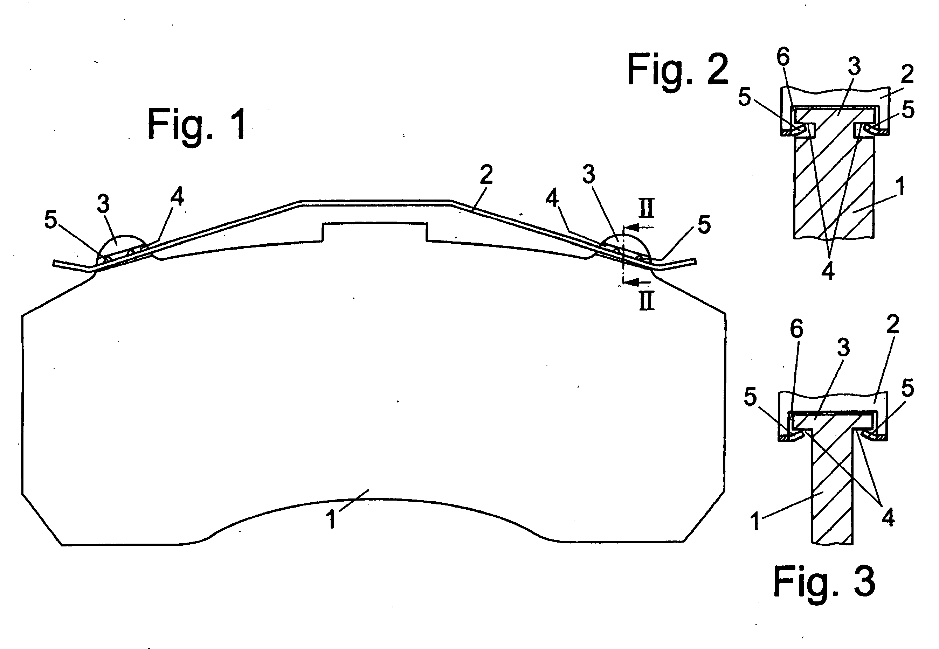

In der Figur 1 ist ein Bremsbelag für eine Scheibenbremse, insbesondere eines Nutzfahrzeuges, dargestellt, der eine Belagträgerplatte 1 aufweist, an der ein Reibbelag befestigt ist, der, da die Darstellung in der Figur 1 die Rückseite des Bremsbelages wiedergibt und der Reibbelag auf der Vorderseite angebracht ist, nicht erkennbar ist.

Die Belagträgerplatte 1 ist an ihrem oberen Außenrand mit zwei Haltelaschen 3 versehen, an denen eine bogenförmige Belaghaltefeder befestigt ist, an der sich in Funktionsstellung ein ebenfalls nicht dargestellter Haltebügel der Scheibenbremse abstützt und unter Federspannung in einen Belagschacht drückt.

Erfindungsgemäß sind die Haltelaschen 3 mit sich in Längsrichtung der Belagträgerplatte 1 erstreckenden seitlichen Hinterschneidungen 4 versehen, an denen jeweils Rastzungen 5 der Belaghaltefeder 2 in deren Wirkrichtung anliegen.

In den Figuren 1 und 2 ist eine Ausführungsvariante gezeigt, in der die Hinterschneidungen 4 durch beidseitig eingebrachte Nuten gebildet sind, an deren oberer, der Belagträgerplatte 1 im übrigen abgewandten Begrenzungswand die Rastzungen 5 anliegen.

Im Überdeckungsbereich mit den Haltelaschen 3 sind in der Belaghaltefeder 2 Längsschlitze 6 vorgesehen, in deren einander gegenüberliegenden Wandbereichen die Rastzungen 5 angeformt sind.

Beim Aufsetzen der Belaghaltefeder 2 zur Montage wird diese auf die Haltelaschen 3 aufgesteckt, unter federnder Rückbiegung der Rastzungen 5, die anschließend in den Bereich der Hinterschneidungen 4 einschnappen.

Bei dem Beispiel nach Figur 2 liegt die Belaghaltefeder 2 zur Abstützung mit ihrem den jeweiligen Schlitz 6 begrenzenden Bereich auf der den Rastzungen 5 gegenüberliegenden Seite an der zugeordneten Wandung der Nut an, deren Bestandteil die Hinterschneidung 4 ist.

In der Figur 3 ist ein Beispiel gezeigt, bei dem die Hinterschneidung 4 durch eine hammerkopfartige Ausbildung der Haltelasche 3 gebildet wird, während die Belagträgerplatte 1 eine sich anschließende durchgängig gleiche Dicke aufweist.

In diesem Fall stützt sich die Haltefeder 2 mit ihrem der jeweiligen Haltelasche 3 zugeordneten freien Ende, dem Schlitz 6 benachbart, an dem Außenrand der Belagträgerplatte 1 ab.

Im übrigen kann die Belagträgerplatte 1 als Gussteil hergestellt sein, wobei dann die Haltelaschen 3 gleich mit angegossen sind, oder als Stahlplatte, mit entsprechender Anformung der Haltelaschen 3.

## Patentansprüche

1. Bremsbelag für eine Scheibenbremse, insbesondere eines Nutzfahrzeuges, mit einer bogenförmigen Belaghaltefeder (2), die radial auslenkbar an mindestens einer, an einem Außenrand einer einen Reibbelag tragenden Belagträgerplatte (1) angeordneten, in der Belaghaltefeder (2) vorgesehene Schlitze (6) durchtretende Haltelaschen (3) befestigt ist, **dadurch gekennzeichnet, dass** die Haltelaschen (3) jeweils mit mindestens einer, in Längsachsrichtung der Belagträgerplatte (1) verlaufenden seitlichen Hinterschneidung (4) versehen sind, an der als Zähne ausgebildete, sich in Richtung der Hinterschneidung (4) erstreckende Rastzungen (5) der Belaghaltefeder (2) in deren Wirkrichtung im Sinne von Widerhaken anliegen.

2. Bremsbelag nach Anspruch 1, **dadurch gekennzeichnet, dass** die Hinterschneidungen (4) an beiden sich gegenüberliegenden Außenseiten der Haltelaschen (3) angeordnet sind.

3. Bremsbelag nach einem der vorhergehenden Ansprüche, **dadurch gekennzeichnet, dass** die Zähne spitz oder trapezförmig geformt sind.

4. Bremsbelag nach einem der vorhergehenden Ansprüche, **dadurch gekennzeichnet, dass** die Hinterschneidungen (4) jeweils aus einer Wandung einer Längsnut gebildet sind.

5. Bremsbelag nach einem der vorhergehenden Ansprüche, **dadurch gekennzeichnet, dass** die Haltelasche (3) im Querschnitt hammerkopfartig ausgebildet ist, wobei die Unterseite des Hammerkopfes die Hinterschneidung (4) bildet.

6. Bremsbelag nach einem der vorhergehenden Ansprüche, **dadurch gekennzeichnet, dass** die Rastzungen (5) einstückig mit der Haltefeder (2) ausgebildet sind.

7. Bremsbelag nach einem der vorhergehenden Ansprüche, **dadurch gekennzeichnet, dass** die Rastzungen (5) an den Seitenrändern eines Längsschlitzes (6) der Belaghaltefeder (2) angeordnet sind, durch den die Haltelasche (3) geführt ist.

8. Bremsbelag nach einem der vorhergehenden Ansprüche, **dadurch gekennzeichnet, dass** jeder Hinterschneidung (4) mindestens zwei Rastzungen (5) zugeordnet sind.

## Claims

1. Brake pad for a disc brake, in particular of a commercial vehicle, with an arcuate anti-rattle spring (2) secured in a radially deflectable manner to at least one retaining tab (3) provided on an outer edge of a pad support plate (1) supporting a friction pad and passing through slots (6) provided in the anti-rattle spring (2), **characterised in that** each of the retaining tabs (3) is provided with at least one lateral undercut (4) extending in the longitudinal direction of the pad support plate (1), against which bear latching tabs (5) of the anti-rattle spring (2) acting in the manner of barbs in the direction of action of the latter, which latching tabs are designed as teeth and extend in the direction of the undercut (4).

2. Brake pad according to claim 1, **characterised in that** the undercuts (4) are located on opposite outer sides of the retaining tabs (3).

3. Brake pad according to any of the preceding claims, **characterised in that** the teeth have a pointed or trapezoidal shape.

4. Brake pad according to any of the preceding claims, **characterised in that** each of the undercuts (4) is formed from a wall of a longitudinal groove.

5. Brake pad according to any of the preceding claims, **characterised in that** the retaining tab (3) has a hammer head-shaped cross-section, the underside of the hammer head forming the undercut (4).

6. Brake pad according to any of the preceding claims, **characterised in that** the latching tabs (5) are integrated with the anti-rattle spring (2).

7. Brake pad according to any of the preceding claims, **characterised in that** the latching tabs (5) are located at the lateral edges of a longitudinal slot (6) of the anti-rattle spring (2), through which the retaining tab (3) is guided.

8. Brake pad according to any of the preceding claims, **characterised in that** at least two latching tabs (5) are assigned to each undercut (4).

## Revendications

1. Garniture de frein pour un frein à disque, en particulier pour un véhicule utilitaire, comprenant un ressort en arc (2) de retenue de la garniture fixé, à excursion radiale, à au moins une plaquette de retenue (3) disposée à un bord extérieur d'une plaque d'appui de garniture (1), qui porte une garniture à friction, et passant à travers des fentes (6) formées dans ledit ressort de retenue de garniture (2), **caractérisée en ce que** chacune desdites plaquettes de retenue (3) est pourvue d'au moins une dépouille inverse latérale (4), qui s'étend le long de l'orientation longitudinal de l'axe de ladite plaque de retenue de garniture (1) et contre laquelle portent des languettes d'encliquetage (5) dudit ressort de retenue de garniture (2) le long du sens opératif du ressort en sens des barbes, qui sont configurées en dents et s'étendent à une orientation vers ladite dépouille inverse (4).

2. Garniture de frein selon la revendication 1, **caractérisée en ce que** lesdites dépouilles inverses (4) sont disposées aux côtés extérieurs opposés l'un à l'autre desdites plaquettes de retenue (3).

3. Garniture de frein selon une quelconque des revendications précédentes, **caractérisée en ce que** les dents sont formés à pointe ou en trapèze.

4. Garniture de frein selon quelconque des revendications précédentes **caractérisée en ce que** chacune desdites dépouilles inverses (4) est formée d'une paroi d'une rainure longitudinale.

5. Garniture de frein selon quelconque des revendications précédentes, **caractérisée en ce que** ladite plaquette de retenue (3) a une section transversale en forme d'une tête de marteau, au côté inférieur de ladite tête de marteau constituant ladite dépouille inverse (4).

6. Garniture de frein selon une quelconque des revendications précédentes, **caractérisée en ce que** lesdites languettes d'encliquetage (5) sont formées en une seule pièce ensemble avec ledit ressort de retenue (2)

7. Garniture de frein selon une quelconque des revendications précédentes, **caractérisée en ce que** lesdites languettes d'encliquetage (5) sont disposées aux bords latéraux d'une fente longitudinale (6) dudit ressort de retenue de garniture (2), à travers laquelle ladite plaquette de retenue (3) est passé.

8. Garniture de frein selon une quelconque des revendications précédentes, **caractérisée en ce qu'**au moins deux languettes d'encliquetage (5) sont affectées à chaque dépouille inverse (4).
